# EUROPEAN PATENT APPLICATION

(11) **EP 4 344 944 A1**
(43) Date of publication of application: **03.04.2024**
(21) Application number: 23197165.6
(22) Date of filing: 13.09.2023
(51) Int. Cl.: B60N 2/28

(54) **INTERNATIONAL STANDARDS ORGANIZATION FIX MECHANISM AND SAFETY SEAT COMPRISING SAME**

(30) Priority: 29.09.2022 CN 202222600075 U
(71) Applicant: Ningbo Baby First Baby Products Co., Ltd., Yuyao, Zhejiang 315412 (CN)
(72) Inventor: PAN, Xiaolu, Sanqishi Town, Yuyao, 315412 (CN); WANG, Youping, Sanqishi Town, Yuyao, 315412 (CN)
(74) Representative: Herrmann, Uwe

(57) **Abstract**

The present disclosure provides an International Standards Organization FIX (ISOFIX) mechanism and a safety seat including the same, and relates to the technical field of safety seats. The ISOFIX mechanism includes a shell and a fastening member. The fastening member is rotatably connected to the shell. The fastening member is provided with a first locking slot. A first limiting portion configured to abut against an anchor rod on a vehicle is arranged in the first locking slot. The shell is provided with a second locking slot. A second limiting portion configured to abut against the anchor rod is arranged in the second locking slot. When the fastening member is at a locked position, the first limiting portion is closer to a slot opening of the second locking slot than the second limiting portion along a length direction of the shell. The safety seat includes the ISOFIX mechanism described above. The ISOFIX mechanism can be installed obliquely relative to the anchor rod to facilitate the installation process.

## Description

### TECHNICAL FIELD

The present disclosure relates to the technical field of safety seats, and particularly to an International Standards Organization FIX (ISOFIX) mechanism and a safety seat including the same.

### BACKGROUND

Child safety seats, also known as Child Restraint Systems (CRSs), are a type of seats specially designed for children of different ages (or weights) and installed in vehicles to effectively improve children's safety during driving.

There are mainly three methods for installing the child safety seats in vehicles. According to a conventional installation method, a child safety seat is secured to a rear seat in a vehicle by seat belts. However, during the long-term use, it is found that the securing method using the seat belts is complicated, and cannot provide a sufficient fastening force, and is prone to errors during installation. To allow the child safety seat and the seat in the vehicle to be more closely secured together, Europe and the United States have respectively formulated the standards for the way to secure a child safety seat on a vehicle: the Lower Anchors and Tethers for Children (LATCH) system in the United States and the ISOFIX system in Europe. The ISOFIX system is a fast rigid connection system, which includes two rigid connection points on the vehicle and two matching rigid connection devices on the child restraint system, and also provides an anti-rollover method (such as using a top tether or using support legs). It is simpler to secure a child safety seat with the ISOFIX system than with seat belts, and the ISOFIX system can effectively reduce the risk of incorrect installation of the child safety seat and provides a robust and reliable rigid connection. Therefore, the ISOFIX system has been accepted by numerous vehicle manufacturers.

However, for an existing ISOFIX mechanism including a fastening member, during installation, the fastening member cannot be engaged with an anchor rod on a vehicle to effect a rigid connection unless the fastening member exactly faces the anchor rod. In actual use, parents certainly insert a telescopic rod into an ISOFIX interface on the vehicle from the left or right side of the ISOFIX mechanism. Because the fastening member is likely to tilt relative to the anchor rod on the vehicle, it is often necessary to straighten the child safety seat, so that the telescopic rod exactly faces the ISOFIX interface on the seat in the vehicle in order to lock the fastening member. Such an installation process is inconvenient.

### SUMMARY

An objective of the present disclosure is to provide an ISOFIX mechanism that can be installed obliquely relative to an anchor rod to facilitate the installation process.

Another objective of the present disclosure is to provide a safety seat including the ISOFIX mechanism described above, so that the safety seat can be more quickly installed on a seat in a vehicle.

To achieve one of the objectives of the present disclosure, the present disclosure adopts the following technical solution. An ISOFIX mechanism is provided, including a shell and a fastening member, where the fastening member is rotatably connected to the shell, the fastening member is provided with a first locking slot, a first limiting portion configured to abut against an anchor rod on a vehicle is arranged in the first locking slot, the shell is provided with a second locking slot, a second limiting portion configured to abut against the anchor rod is arranged in the second locking slot, and when the fastening member is at a locked position, the first limiting portion is closer to a slot opening of the second locking slot than the second limiting portion along a length direction of the shell.

Preferably, the fastening member is arranged in the shell, the fastening member includes a first end portion and a second end portion, the first end portion is connected to the second end portion to form the first locking slot, the anchor rod abuts against the second end portion when the fastening member is at an unlocked position, and the second end portion is partially exposed in the second locking slot when the fastening member is at the locked position.

Preferably, a limiting member is arranged in the shell, and the limiting member is configured to abut against the fastening member to prevent the anchor rod from driving the fastening member to tilt.

Preferably, recessed portions are respectively arranged on two sides of the shell, and the recessed portions form the limiting member.

Preferably, the shell is substantially tubular, the fastening member is arranged in a middle of the shell along a width direction of the shell, and the shell includes two second limiting portions symmetrically arranged on two sides of the fastening member respectively.

Preferably, the first limiting portion is a first arc surface arranged facing a slot opening of the first locking slot, the first arc surface is semicircular, and a radius of the first arc surface is substantially equal to a radius of the anchor rod.

Preferably, the first locking slot further includes a first contact surface and a second contact surface respectively arranged on two sides of the first arc surface, the first contact surface and the second contact surface are tangent to the first arc surface, the first contact surface is configured to be abutted against by the anchor rod when the fastening member is at the unlocked position, and the first contact surface is arranged obliquely when the fastening member is at the locked position.

Preferably, the second limiting portion is a second arc surface arranged facing the slot opening of the second locking slot, the second arc surface is semicircular, the second arc surface is arranged eccentrically with the first arc surface, and a radius of the second arc surface is substantially equal to the radius of the anchor rod.

Preferably, the second locking slot further includes a third contact surface and a fourth contact surface respectively arranged on two sides of the second arc surface, the third contact surface and the fourth contact surface are tangent to the second arc surface, the second locking slot further includes a first inclined surface extending from an end portion of the third contact surface and a second inclined surface extending from an end portion of the fourth contact surface, and the first inclined surface and the second inclined surface form a flared opening.

To achieve another objective of the present disclosure, the present disclosure adopts the following technical solution. A safety seat is provided, including the ISOFIX mechanism described above.

Compared with the prior art, the present disclosure has the following advantages. Because the first limiting portion is closer to the slot opening of the second locking slot than the second limiting portion, that is, the fastening member of the present disclosure is arranged closer to the outside, compared with an ISOFIX mechanism in the prior art, the anchor rod is allowed to rotate within a range relative to the shell, which means that the ISOFIX mechanism can be installed obliquely relative to the anchor rod on the vehicle. When the ISOFIX mechanism is inserted into an ISOFIX interface on the vehicle, the installation of the safety seat can be completed by roughly aligning the fastening member with the anchor rod on the vehicle. Such an installation process is simpler and faster.

### BRIEF DESCRIPTION OF THE DRAWINGS

FIG. 1 is a schematic structural diagram of a fastening member according to a preferred embodiment of the present disclosure.
FIG. 2 is a schematic structural diagram of a shell according to a preferred embodiment of the present disclosure.
FIG. 3 is a schematic structural diagram of an ISOFIX mechanism in a locked state.
FIG. 4 is a schematic structural diagram of the ISOFIX mechanism in an unlocked state.
FIG. 5 is a top view of FIG. 3.
FIG. 6 is a schematic cross-sectional structural view of the ISOFIX mechanism.

In the drawings: 1. fastening member; 1a. first locking slot; 11. first limiting portion; 12. first end portion; 13. second end portion; 141. first contact surface; 142. first arc surface; 143. second contact surface; 15. mounting hole;
2. shell; 2a. second locking slot; 21. second limiting portion; 22. recessed portion; 231. third contact surface; 232. first inclined surface; 233. fourth contact surface; 234. second inclined surface; 235. second arc surface;
3. anchor rod.

### DETAILED DESCRIPTION OF THE EMBODIMENTS

The present disclosure will be further described through specific embodiments. It should be noted that the embodiments or technical features described below may be arbitrarily combined to form new embodiments without conflict.

In the description of the present disclosure, it should be noted that orientation and position relationships indicated by the orientation terms such as "center", "transverse", "longitudinal", "length", "width", "thickness", "on", "below", "front", "rear", "left", "right", "vertical", "horizontal", "top", "bottom", "inner", "outer", "clockwise", and "counterclockwise" are based on the orientation or positional relationships shown in the drawings, and are only for the convenience of describing the present disclosure and simplifying the description, rather than indicating or implying that the apparatus or element described must have a specific orientation or be constructed and operated in a specific orientation, and therefore are not to be construed as limiting the present disclosure.

It should be noted that in the specification and claims of the present disclosure, the terms "first", "second" or the like are intended to distinguish between similar objects but do not indicate a particular order or sequence.

In the specification and claims of the present disclosure, the terms "include," "include," and any other variants thereof are intended to cover a non-exclusive inclusion. For example, a process, method, system, product, or device that includes a list of steps or units is not necessarily limited to those expressly listed steps or units, but may include other steps or units not expressly listed or inherent to such a process, method, product, or device.

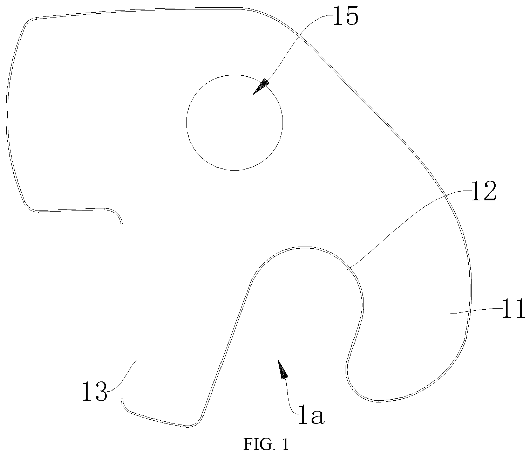

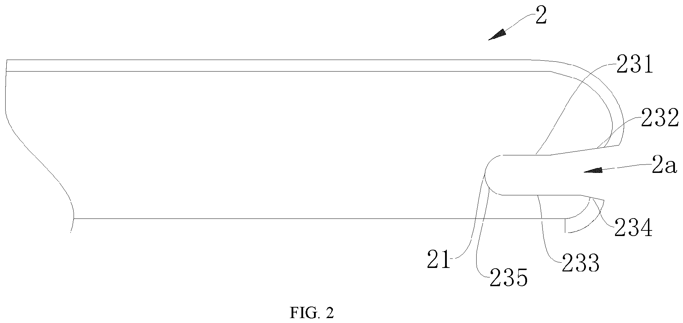

The present disclosure provides an ISOFIX mechanism. As shown in FIG. 1 to FIG. 4, the ISOFIX mechanism includes a shell 2 and a fastening member 1. The fastening member 1 is rotatably connected to the shell 2.

The fastening member 1 is provided with a first locking slot 1a, and a first limiting portion 11 configured to abut against an anchor rod 3 on a vehicle is arranged in the first locking slot 1a.

The fastening member 1 is further provided with a mounting hole 15. A rotating shaft extends through the mounting hole 15. Two ends of the rotating shaft are connected to the shell, so that the fastening member 1 is rotatable relative to the shell 2.

The shell 2 is provided with a second locking slot 2a, and a second limiting portion 21 configured to abut against the anchor rod 3 is arranged in the second locking slot 2a.

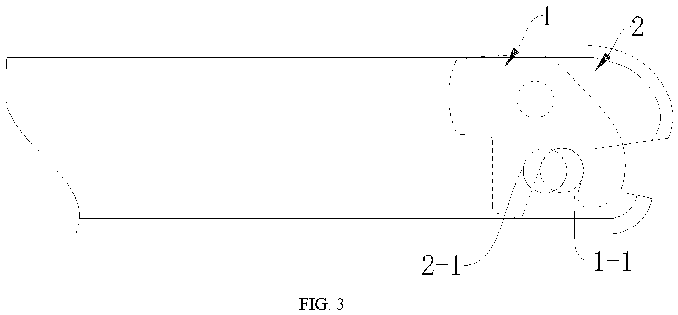

As shown in FIG. 3, when the fastening member 1 is at a locked position, the first limiting portion 11 is closer to a slot opening of the second locking slot 2a than the second limiting portion 21 along a length direction of the shell 2.

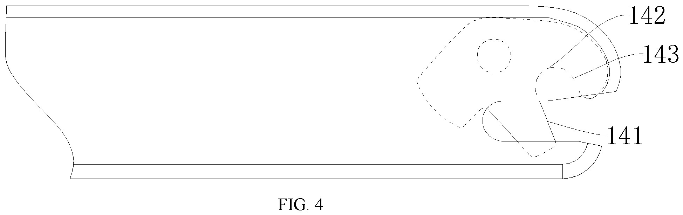

A process for installing the ISOFIX mechanism is as follows. First, a user unlocks the fastening member 1 to enter a state shown in FIG. 4, stands on one side of a safety seat, aligns the slot opening of the second locking slot 2a with the anchor rod 3 on the vehicle, and pushes the ISOFIX mechanism toward the back of a seat in the vehicle, so that the anchor rod 3 on the vehicle abuts against the fastening member 1 and the fastening member 1 rotates to a position shown in FIG. 3 to lock the anchor rod 3 on the vehicle.

Preferably, the fastening member 1 is arranged in the shell 2, and the fastening member 1 includes a first end portion 12 and a second end portion 13. The first end portion 12 is connected to the second end portion 13 to form the first locking slot 1a. The anchor rod 3 abuts against the second end portion 13 when the fastening member 1 is at an unlocked position, and the second end portion 13 is partially exposed in the second locking slot 2a when the fastening member 1 is at the locked position.

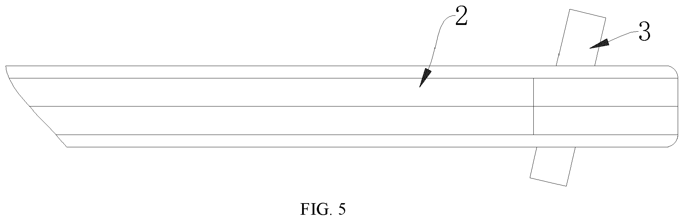

It can be understood that because the fastening member 1 is arranged in the shell, a part of the structure of the fastening member 1 is illustrated with dashed lines in FIG. 3. A first point on the anchor rod 3 is fixed to a dashed-line circle 1-1 by the first limiting portion 11, and a second point on the anchor rod 3 is fixed to a solid-line circle 2-1 by the second limiting portion 21 on one side of the shell 2. The circle 1-1 and the circle 2-1 are arranged eccentrically, and the ISOFIX mechanism is installed obliquely relative to the anchor rod 3 on the vehicle. FIG. 5 is a top view of FIG. 3.

Compared with the prior art, the fastening member 1 is arranged closer to the outside relative to the shell 2, i.e., the circle 1-1 is relatively more to the right, and the ISOFIX mechanism can be installed obliquely relative to the anchor rod 3 on the vehicle. When the ISOFIX mechanism is inserted into an ISOFIX interface on the vehicle, the installation of the safety seat can be completed by roughly aligning the fastening member 1 with the anchor rod 3 on the vehicle. The installation process is simpler and faster.

Preferably, the first limiting portion 11 is a first arc surface 142 arranged facing a slot opening of the first locking slot 1a, the first arc surface 142 is semicircular, and a radius of the first arc surface 142 is substantially equal to a radius of the anchor rod 3. The first limiting portion 11 has a simple structure and is easy to fabricate.

Preferably, the second limiting portion 21 is a second arc surface 235 arranged facing the slot opening of the second locking slot 2a, the second arc surface 235 is semicircular, the second arc surface 235 is arranged eccentrically with the first arc surface 142, and a radius of the second arc surface 235 is substantially equal to the radius of the anchor rod 3. The second limiting portion 21 has a simple structure and is easy to fabricate.

As an improvement, considering that the fastening member 1 may tilt relative to the shell 2 under a force after the ISOFIX mechanism is installed obliquely relative to the anchor rod 3, resulting in unstable locking of the anchor rod 3 and unsmooth rotation of the fastening member 1, a limiting member is arranged in the shell 2, and the limiting member is configured to abut against the fastening member 1 to prevent the anchor rod 3 on the vehicle from driving the fastening member 1 to tilt.

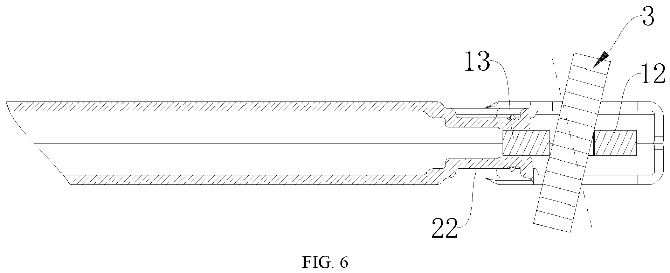

Specifically, as shown in FIG. 6, recessed portions 22 are respectively arranged on two sides of the shell 2, and the recessed portions 22 form the limiting member. The second end portion 13 of the fastening member 1 is clamped by inner walls of the two recessed portions 22 on the two sides. Such a structure is simple and compact and prevents the fastening member 1 from tilting relative to the shell 2.

The shell 2 is substantially tubular, the fastening member 1 is arranged in a middle of the shell 2 along a width direction of the shell 2, and the shell 2 includes two second limiting portions 21 symmetrically arranged on two sides of the fastening member 1 respectively. The ISOFIX mechanism can be installed obliquely relative to the anchor rod 3 in a first direction shown in FIG. 6 or in a second direction symmetrical to the first direction. The second direction is indicated by a dashed line in FIG. 6.

Specifically, the first locking slot 1a further includes a first contact surface 141 and a second contact surface 143 respectively arranged on two sides of the first arc surface 142, the first contact surface 141 and the second contact surface 143 are tangent to the first arc surface 142, the first contact surface 141 is configured to be abutted against by the anchor rod 3 when the fastening member 1 is at the unlocked position, and the first contact surface 141 is arranged obliquely when the fastening member 1 is at the locked position. The fastening member 1 has a simple structure and can firmly hook the anchor rod 3.

Specifically, the second locking slot 2a further includes a third contact surface 231 and a fourth contact surface 233 respectively arranged on two sides of the second arc surface 235, the third contact surface 231 and the fourth contact surface 233 are tangent to the second arc surface 235, the second locking slot 2a further includes a first inclined surface 232 extending from an end portion of the third contact surface 231 and a second inclined surface 234 extending from an end portion of the fourth contact surface 233, and the first inclined surface 232 and the second inclined surface 234 form a flared opening. The first arc surface 142, the first contact surface 141 and second contact surface 143 on the two sides of the first arc surface 142, the second arc surface 235, and the third contact surface 231 and the fourth contact surface 233 on the two sides of the second arc surface 235 lie in six planes and respectively limit the anchor rod 3 on the vehicle in different directions. In this way, the position of the anchor rod 3 on the vehicle is reliably locked. The shell 2 has a simple structure, and the flared opening can guide the anchor rod 3 on the vehicle and guide the installation of the ISOFIX mechanism.

The present disclosure also provides a safety seat including the ISOFIX mechanism described above. The safety seat can be installed more conveniently and quickly.

The basic principles, main features and advantages of the present disclosure have been described above. Those skilled in the art should understand that the present disclosure is not limited to the above-mentioned embodiments. The descriptions of the embodiments and the specification are only for illustrating the principles of the present disclosure. Various changes and improvements may be made to the present disclosure without departing from the spirit and scope of the present disclosure, and such changes and improvements all fall within the scope of protection claimed by the present disclosure. The scope of protection claimed by the present disclosure is defined by the appended claims and equivalents thereof.

## Claims

1. An International Standards Organization FIX (ISOFIX) mechanism, comprising a shell and a fastening member, wherein the fastening member is rotatably connected to the shell, the fastening member is provided with a first locking slot, a first limiting portion configured to abut against an anchor rod on a vehicle is arranged in the first locking slot, the shell is provided with a second locking slot, a second limiting portion configured to abut against the anchor rod is arranged in the second locking slot, and when the fastening member is at a locked position, the first limiting portion is closer to a slot opening of the second locking slot than the second limiting portion along a length direction of the shell.

2. The ISOFIX mechanism according to claim 1, wherein the fastening member is arranged in the shell, the fastening member comprises a first end portion and a second end portion, the first end portion is connected to the second end portion to form the first locking slot, the anchor rod abuts against the second end portion when the fastening member is at an unlocked position, and the second end portion is partially exposed in the second locking slot when the fastening member is at the locked position.

3. The ISOFIX mechanism according to claim 2, wherein a limiting member is arranged in the shell, and the limiting member is configured to abut against the fastening member to prevent the anchor rod from driving the fastening member to tilt.

4. The ISOFIX mechanism according to claim 3, wherein recessed portions are respectively arranged on two sides of the shell, and the recessed portions form the limiting member.

5. The ISOFIX mechanism according to claim 3 or 4, wherein the shell is substantially tubular, the fastening member is arranged in a middle of the shell along a width direction of the shell, and the shell comprises two second limiting portions symmetrically arranged on two sides of the fastening member respectively.

6. The ISOFIX mechanism according to claim 1 or 2, wherein the first limiting portion is a first arc surface arranged facing a slot opening of the first locking slot, the first arc surface is semicircular, and a radius of the first arc surface is substantially equal to a radius of the anchor rod.

7. The ISOFIX mechanism according to claim 6, wherein the first locking slot further comprises a first contact surface and a second contact surface respectively arranged on two sides of the first arc surface, the first contact surface and the second contact surface are tangent to the first arc surface, the first contact surface is configured to be abutted against by the anchor rod when the fastening member is at the unlocked position, and the first contact surface is arranged obliquely when the fastening member is at the locked position.

8. The ISOFIX mechanism according to claim 7, wherein the second limiting portion is a second arc surface arranged facing the slot opening of the second locking slot, the second arc surface is semicircular, the second arc surface is arranged eccentrically with the first arc surface, and a radius of the second arc surface is substantially equal to the radius of the anchor rod.

9. The ISOFIX mechanism according to claim 8, wherein the second locking slot further comprises a third contact surface and a fourth contact surface respectively arranged on two sides of the second arc surface, the third contact surface and the fourth contact surface are tangent to the second arc surface, the second locking slot further comprises a first inclined surface extending from an end portion of the third contact surface and a second inclined surface extending from an end portion of the fourth contact surface, and the first inclined surface and the second inclined surface form a flared opening.

10. A safety seat, comprising the ISOFIX mechanism according to any one of claims 1-9.
